# EUROPEAN PATENT APPLICATION

(11) **EP 4 745 003 A1**
(43) Veröffentlichungstag der Anmeldung: **20.05.2026**
(21) Anmeldenummer: 23944612.3
(22) Anmeldetag: 10.07.2023
(51) Int. Cl.: B62D 5/04, B62D 101/00, B62D 119/00

(54) **LENKSTEUERUNGSVERFAHREN UND -VORRICHTUNG**

(71) Anmelder: Schaeffler Technologies AG & Co. KG, 91074 Herzogenaurach (DE)
(72) Erfinder: ZHANG, Linhui, Shanghai 201804 (CN); TAO, Jiayu, Shanghai 201804 (CN)
(74) Vertreter: Schaeffler Technologies
(86) Internationale Anmeldenummer: PCT/CN2023/106579
(87) Internationale Veröffentlichungsnummer: WO 2025/010589

(57) **Zusammenfassung**

Die vorliegende Erfindung betrifft ein Lenksteuerungsverfahren und eine Lenksteuerungsvorrichtung. Das Lenksteuerungsverfahren umfasst das Erhalten eines Rückstellanforderungsmoments basierend auf der aktuellen Handkraft des Fahrers, der Fahrzeuggeschwindigkeit, dem Lenkradwinkel und der Lenkradwinkelgeschwindigkeit, um die Rückstellung des Fahrzeugs unterstützend zu steuern. Wobei ein Rückstellmomentkoeffizient basierend auf der Lenkrad-Lenkrichtung und der aktuellen Handkraft des Fahrers erhalten wird; ein ursprüngliches Rückstellanforderungsmoment basierend auf der Fahrzeuggeschwindigkeit, dem Lenkradwinkel und der Lenkradwinkelgeschwindigkeit erhalten wird; sowie das Rückstellanforderungsmoment basierend auf dem Rückstellmomentkoeffizienten und dem ursprünglichen Rückstellanforderungsmoment erhalten wird. Durch das Lenksteuerungsverfahren werden das Problem der inkonsistenten Rückstellgeschwindigkeiten und verbleibenden Rückstellwinkel der linken und rechten Seite des elektrohydraulischen gekoppelten Lenksystems des Fahrzeugs optimiert, und der haptische Stoß bei der Übernahme durch den Fahrer während des Rückstellvorgangs kann wirksam reduziert werden.

## Beschreibung

### Technisches Gebiet

Die vorliegende Erfindung betrifft das Gebiet der Lenksteuerungstechnik, insbesondere ein Lenksteuerungsverfahren und eine Lenksteuerungsvorrichtung.

### Stand der Technik

Bei der aktuellen Lenksteuerungstechnik von Fahrzeugen wird üblicherweise eine Regelung (Closed-Loop-Control) für die Rückstellgeschwindigkeit während des Rückstellvorgangs der Lenkung durchgeführt. Zuerst wird anhand des Lenkradwinkels und der Fahrzeuggeschwindigkeit eine Zielgeschwindigkeit des Lenkrads aus einer Tabelle ermittelt, anschließend wird eine proportionale Regelung der Differenz zwischen der Zielgeschwindigkeit und der tatsächlichen Geschwindigkeit durchgeführt, um ein ursprüngliches Rückstellanforderungsmoment zu erhalten, und daraus basierend auf einem Rückstellmomentkoeffizienten das Rückstellmoment abgeleitet.

Bei elektrohydraulischen Servolenkungssystemen (EHPS) von Nutzfahrzeugen besteht jedoch aufgrund von Fertigungstoleranzen der Bauteile und der Koaxialität bei der Montage das Problem eines unterschiedlichen Lenkgrads nach links und rechts. Eine direkte Steuerung der Stärke des Rückstellmoments basierend auf dem Absolutwert der Handkraft des Fahrers führt leicht zu inkonsistenten Rückstellgeschwindigkeiten nach links und rechts, was zu unterschiedlichen verbleibenden Rückstellwinkeln nach links und rechts führt.

Darüber hinaus wird bei der aktuellen Lenksteuerungstechnik der Integralanteil (I-Anteil) bei der Regelung nicht berücksichtigt, wenn die Differenz der Handkraft des Fahrers gering ist. Daher verursacht die Servolenkung des Fahrzeugs beim Eingreifen des Fahrers zur Beendigung der Rückstellung während des Rückstellvorgangs einen haptischen Stoß bei der Übernahme durch den Fahrer.

### Kurzdarstellung der Erfindung

Um die im Stand der Technik bestehenden Probleme zu überwinden, stellt die vorliegende Erfindung ein Lenksteuerungsverfahren und eine Lenksteuerungsvorrichtung bereit.

Gemäß einem ersten Aspekt eines Ausführungsbeispiels der vorliegenden Erfindung wird ein Lenksteuerungsverfahren bereitgestellt, bei dem ein Rückstellanforderungsmoment basierend auf der aktuellen Handkraft des Fahrers, der Fahrzeuggeschwindigkeit, dem Lenkradwinkel und der Lenkradwinkelgeschwindigkeit erhalten wird, um die Rückstellung des Fahrzeugs unterstützend zu steuern. Wobei das Lenksteuerungsverfahren umfasst: Erhalten eines Rückstellmomentkoeffizienten basierend auf dem Lenkradwinkel und der aktuellen Handkraft des Fahrers; Erhalten eines ursprünglichen Rückstellanforderungsmoments basierend auf der Fahrzeuggeschwindigkeit, dem Lenkradwinkel und der Lenkradwinkelgeschwindigkeit; sowie Erhalten des Rückstellanforderungsmoments basierend auf dem Rückstellmomentkoeffizienten und dem ursprünglichen Rückstellanforderungsmoment.

In einigen Ausführungsbeispielen umfasst das Erhalten eines Rückstellmomentkoeffizienten basierend auf dem Lenkradwinkel und der aktuellen Handkraft des Fahrers: während eines Bewegungsvorgangs, bei dem die Lenkrichtung des Lenkrads von der Rückstellrichtung abgewandt ist, Erhalten eines Maximalwerts der Handkraft des Fahrers basierend auf der aktuellen Handkraft des Fahrers; sowie Erhalten des Rückstellmomentkoeffizienten basierend auf dem Maximalwert der Handkraft des Fahrers und der aktuellen Handkraft des Fahrers.

In einigen Ausführungsbeispielen wird, wenn die aktuelle Handkraft des Fahrers in die von der Rückstellrichtung abgewandte Richtung ausgeübt wird, der Maximalwert der Handkraft des Fahrers zurückgesetzt, wenn die Lenkradwinkelgeschwindigkeit in die von der Rückstellrichtung abgewandte Richtung größer als ein voreingestellter Winkelgeschwindigkeitsschwellenwert ist.

In einigen Ausführungsbeispielen umfasst das Erhalten eines ursprünglichen Rückstellanforderungsmoments basierend auf der Fahrzeuggeschwindigkeit, dem Lenkradwinkel und der Lenkradwinkelgeschwindigkeit: Berechnen und Erhalten einer Rückstell-Sollwinkelgeschwindigkeit basierend auf der Fahrzeuggeschwindigkeit und dem Lenkradwinkel, Berechnen und Erhalten der Lenkradwinkelgeschwindigkeit, Berechnen des Absolutwerts der Differenz zwischen der Rückstell-Sollwinkelgeschwindigkeit und der Lenkradwinkelgeschwindigkeit, Erhalten einer Lenkradwinkelgeschwindigkeitsdifferenz, Eingeben der Lenkradwinkelgeschwindigkeitsdifferenz in einen Proportional-Integral-Differential (PID)-Regler, Erhalten des ursprünglichen Rückstellanforderungsmoments.

In einigen Ausführungsbeispielen wird der I-Anteil in dem PID-Regler auf Null gesetzt, wenn der Rückstellmomentkoeffizient kleiner als ein Kalibrierungsschwellenwert ist. In einigen Ausführungsbeispielen umfasst das Erhalten des Rückstellanforderungsmoments basierend auf dem Rückstellmomentkoeffizienten und dem ursprünglichen Rückstellanforderungsmoment: Eingeben des Produkts aus dem Rückstellmomentkoeffizienten und dem ursprünglichen Rückstellanforderungsmoment in einen Begrenzer, um das Rückstellanforderungsmoment zu erhalten, um den Maximalwert und den Minimalwert des Rückstellanforderungsmoments zu begrenzen. In einigen Ausführungsbeispielen begrenzt der Begrenzer den Maximalwert und den Minimalwert des Rückstellanforderungsmoments basierend auf der Fahrzeuggeschwindigkeit und dem Lenkradwinkel.

Gemäß einem zweiten Aspekt eines Ausführungsbeispiels der vorliegenden Erfindung wird eine Lenksteuerungsvorrichtung bereitgestellt, wobei die Lenksteuerungsvorrichtung dazu konfiguriert ist, ein Rückstellanforderungsmoment basierend auf der aktuellen Handkraft des Fahrers, der Fahrzeuggeschwindigkeit, dem Lenkradwinkel und der Lenkradwinkelgeschwindigkeit zu erhalten, um die Rückstellung des Fahrzeugs unterstützend zu steuern. Wobei die Lenksteuerungsvorrichtung umfasst: eine Berechnungseinheit für den Rückstellmomentkoeffizienten, die dazu konfiguriert ist, einen Rückstellmomentkoeffizienten basierend auf dem Lenkradwinkel und der aktuellen Handkraft des Fahrers zu berechnen und zu erhalten; eine Berechnungseinheit für das ursprüngliche Rückstellanforderungsmoment, die dazu konfiguriert ist, ein ursprüngliches Rückstellanforderungsmoment basierend auf der Fahrzeuggeschwindigkeit, dem Lenkradwinkel und der Lenkradwinkelgeschwindigkeit zu berechnen und zu erhalten; sowie eine Berechnungseinheit für das Rückstellanforderungsmoment, die dazu konfiguriert ist, das Rückstellanforderungsmoment basierend auf dem Rückstellmomentkoeffizienten und dem ursprünglichen Rückstellanforderungsmoment zu berechnen und zu erhalten.

In einigen Ausführungsbeispielen ist die Berechnungseinheit für den Rückstellmomentkoeffizienten ferner dazu konfiguriert: während eines Bewegungsvorgangs, bei dem die Lenkrichtung des Lenkrads von der Rückstellrichtung abgewandt ist, einen Maximalwert der Handkraft des Fahrers basierend auf der aktuellen Handkraft des Fahrers zu erhalten; sowie den Rückstellmomentkoeffizienten basierend auf dem Maximalwert der Handkraft des Fahrers und der aktuellen Handkraft des Fahrers zu erhalten.

In einigen Ausführungsbeispielen ist die Berechnungseinheit für den Rückstellmomentkoeffizienten ferner dazu konfiguriert: wenn die aktuelle Handkraft des Fahrers in die von der Rückstellrichtung abgewandte Richtung ausgeübt wird und die Lenkradwinkelgeschwindigkeit in die von der Rückstellrichtung abgewandte Richtung größer als ein voreingestellter Winkelgeschwindigkeitsschwellenwert ist, den Maximalwert der Handkraft des Fahrers zurückzusetzen.

In einigen Ausführungsbeispielen ist die Berechnungseinheit für den Rückstellmomentkoeffizienten ferner dazu konfiguriert: den Absolutwert der Differenz zwischen dem Maximalwert der Handkraft des Fahrers und der aktuellen Rückstell-Handkraft des Fahrers zu berechnen, um eine Handkraftdifferenz zu erhalten, sowie basierend auf der Handkraftdifferenz den Rückstellmomentkoeffizienten zu erhalten. In einigen Ausführungsbeispielen umfasst die Berechnungseinheit für das ursprüngliche Rückstellanforderungsmoment einen PID-Regler, wobei die Berechnungseinheit für das ursprüngliche Rückstellanforderungsmoment ferner dazu konfiguriert ist: eine Rückstell-Sollwinkelgeschwindigkeit basierend auf der Fahrzeuggeschwindigkeit und dem Lenkradwinkel zu berechnen und zu erhalten, die Lenkradwinkelgeschwindigkeit zu berechnen und zu erhalten, den Absolutwert der Differenz zwischen der Rückstell-Sollwinkelgeschwindigkeit und der Lenkradwinkelgeschwindigkeit zu berechnen, um eine Lenkradwinkelgeschwindigkeitsdifferenz zu erhalten, die Lenkradwinkelgeschwindigkeitsdifferenz in den PID-Regler einzugeben, um das ursprüngliche Rückstellanforderungsmoment zu erhalten.

In einigen Ausführungsbeispielen ist die Berechnungseinheit für das ursprüngliche Rückstellanforderungsmoment ferner dazu konfiguriert: den I-Anteil in dem PID-Regler auf Null zu setzen, wenn der Rückstellmomentkoeffizient kleiner als ein Kalibrierungsschwellenwert ist.

In einigen Ausführungsbeispielen umfasst die Berechnungseinheit für das Rückstellanforderungsmoment einen Begrenzer, wobei die Berechnungseinheit für das Rückstellanforderungsmoment ferner dazu konfiguriert ist: das Produkt aus dem Rückstellmomentkoeffizienten und dem ursprünglichen Rückstellanforderungsmoment in den Begrenzer einzugeben, um das Rückstellanforderungsmoment zu erhalten, um den Maximalwert und den Minimalwert des Rückstellanforderungsmoments zu begrenzen.

In einigen Ausführungsbeispielen ist der Begrenzer dazu konfiguriert: den Maximalwert und den Minimalwert des Rückstellanforderungsmoments basierend auf der Fahrzeuggeschwindigkeit und dem Lenkradwinkel zu begrenzen.

Durch das Lenksteuerungsverfahren und die Lenksteuerungsvorrichtung, die durch die Ausführungsbeispiele der vorliegenden Erfindung bereitgestellt werden, kann in einem EHPS-System die Verwendung der Handkraftdifferenz zur Steuerung der Rückstellung das Problem der inkonsistenten Rückstellgeschwindigkeiten und verbleibenden Rückstellwinkel der linken und rechten Seite des elektrohydraulischen gekoppelten Lenksystems des Fahrzeugs optimieren. Darüber hinaus führt die vorliegende Erfindung eine PID-Regelung für das Rückstellmoment durch; wenn die Handkraftdifferenz des Fahrers kleiner als ein voreingestellter Schwellenwert ist, wird der I-Anteil der PID-Regelung auf Null gesetzt; daher kann während des Rückstellvorgangs der haptische Stoß bei der Übernahme durch den Fahrer wirksam reduziert werden.

### Beschreibung der Zeichnungen

Die hierin aufgenommenen und einen Teil dieser Beschreibung bildenden Zeichnungen veranschaulichen Ausführungsbeispiele, die mit der vorliegenden Erfindung übereinstimmen, und dienen zusammen mit der Beschreibung der Erläuterung der Prinzipien der vorliegenden Erfindung.
Fig. 1 zeigt ein schematisches Diagramm eines Lenksteuerungsverfahrens gemäß einigen Ausführungsbeispielen;
Fig. 2 zeigt ein schematisches Arbeitsflussdiagramm eines Lenksteuerungsverfahrens gemäß einigen Ausführungsbeispielen; und
Fig. 3 zeigt ein strukturelles Blockdiagramm einer Lenksteuerungsvorrichtung gemäß einigen Ausführungsbeispielen.

### Ausführungsformen

Nachfolgend werden beispielhafte Ausführungsbeispiele im Detail beschrieben, die beispielhaft in der beigefügten Zeichnung dargestellt sind. Wenn sich die folgende Beschreibung auf die beigefügten Zeichnungen bezieht, bezeichnen die gleichen Ziffern in verschiedenen Zeichnungen die gleichen oder ähnliche Elemente, sofern nicht anders angegeben. Die in den folgenden beispielhaften Ausführungsbeispielen beschriebenen Ausführungsformen stellen nicht alle Ausführungsformen dar, die mit der vorliegenden Erfindung übereinstimmen. Stattdessen sind sie lediglich Beispiele für Vorrichtungen und Verfahren, die mit einigen Aspekten der vorliegenden Erfindung, wie in den beigefügten Ansprüchen detailliert beschrieben, übereinstimmen.

Bei der Lenksteuerung von Fahrzeugen wird, um den Einfluss der Handkraft des Fahrers auf die Rückstellgeschwindigkeiten der linken und rechten Seite zu optimieren und die Robustheit der Steuerung zu erhöhen, in der vorliegenden Erfindung ein Lenksteuerungsverfahren vorgeschlagen.

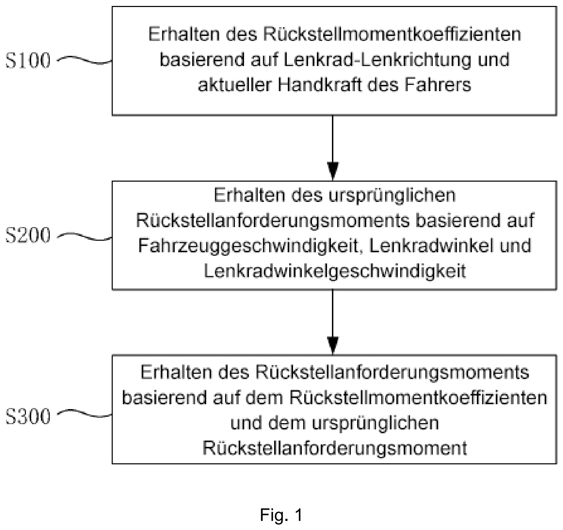

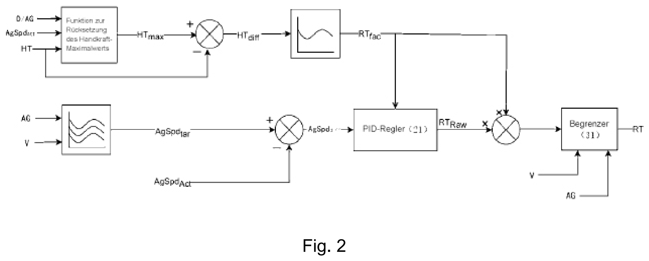

Gemäß den Ausführungsbeispielen der vorliegenden Erfindung zeigt Fig. 1 ein schematisches Diagramm eines Lenksteuerungsverfahrens gemäß einigen Ausführungsbeispielen, und Fig. 2 zeigt ein schematisches Arbeitsflussdiagramm eines Lenksteuerungsverfahrens gemäß einigen Ausführungsbeispielen. In Verbindung mit Fig. 1 und Fig. 2 gezeigt, ist das Lenksteuerungsverfahren das Erhalten eines Rückstellanforderungsmoments (RT) basierend auf der aktuellen Handkraft des Fahrers (HT), der Fahrzeuggeschwindigkeit (V), dem Lenkradwinkel (AG) und der Lenkradwinkelgeschwindigkeit (AgSpd_{ACT}), um die Rückstellung des Fahrzeugs unterstützend zu steuern. Im Einzelnen umfasst das Lenksteuerungsverfahren:
S100: Erhalten eines Rückstellmomentkoeffizienten (RT_{fac}) basierend auf dem Lenkradwinkel (AG) und der aktuellen Handkraft des Fahrers (HT);
S200: Erhalten eines ursprünglichen Rückstellanforderungsmoments (RT_{RAW}) basierend auf der Fahrzeuggeschwindigkeit (V), dem Lenkradwinkel (AG) und der Lenkradwinkelgeschwindigkeit (AgSpd_{ACT}); sowie
S300: Erhalten eines Rückstellanforderungsmoments (RT) basierend auf dem Rückstellmomentkoeffizienten (RT_{fac}) und dem ursprünglichen Rückstellanforderungsmoment (RT_{RAW}).

Wie in Fig. 2 gezeigt, wird in Schritt S100 während des Bewegungsvorgangs, bei dem die Lenkrichtung (D) des Lenkrads von der Rückstellrichtung abgewandt ist, die aktuelle Handkraft des Fahrers (HT) erfasst. Die aktuelle Handkraft des Fahrers (HT) kann sich von Moment zu Moment ändern. Zum Beispiel wird bei der tatsächlichen Arbeit während des Bewegungsvorgangs des Lenkrads von der Rückstellrichtung abgewandt die aktuelle Handkraft des Fahrers (HT) zum Anfangszeitpunkt als Maximalwert der Handkraft des Fahrers (HTₘₐₓ) erfasst; wenn die aktuelle Handkraft des Fahrers (HT) zum nächsten Zeitpunkt größer ist als der vorherige Maximalwert der Handkraft des Fahrers (HTₘₐₓ), dann ersetzt die aktuelle Handkraft des Fahrers (HT) zum nächsten Zeitpunkt den Maximalwert der Handkraft des Fahrers (HTₘₐₓ) des vorherigen Zeitpunkts als aktualisierten Maximalwert der Handkraft des Fahrers (HTₘₐₓ); wenn die aktuelle Handkraft des Fahrers (HT) zum nächsten Zeitpunkt kleiner oder gleich dem vorherigen Maximalwert der Handkraft des Fahrers (HTₘₐₓ) ist, wird der Maximalwert der Handkraft des Fahrers (HTₘₐₓ) des vorherigen Zeitpunkts beibehalten, um den Maximalwert der Handkraft des Fahrers (HTₘₐₓ) im Echtzeitzustand zu erhalten.

In einigen Ausführungsbeispielen wird auch der Einfluss der

Lenkradwinkelgeschwindigkeit (AgSpd_{ACT}) auf das Erhalten des Maximalwerts der Handkraft des Fahrers (HTₘₐₓ) berücksichtigt. Im Einzelnen, wenn die aktuelle Handkraft des Fahrers (HT) in die von der Rückstellrichtung abgewandte Richtung ausgeübt wird, wird der Maximalwert der Handkraft des Fahrers (HTₘₐₓ) auf den aktuellen Handkraftwert zurückgesetzt, wenn die Lenkradwinkelgeschwindigkeit (AgSpd_{ACT}) in die von der Rückstellrichtung abgewandte Richtung größer als ein voreingestellter Winkelgeschwindigkeitsschwellenwert ist.

Zum Beispiel wird, während sich das Lenkrad in Richtung der Rückstellung bewegt, beim Ausüben der aktuellen Handkraft des Fahrers (HT) in die von der Rückstellrichtung abgewandte Richtung der Maximalwert der Handkraft des Fahrers (HTₘₐₓ) erst dann zurückgesetzt, wenn die Lenkradwinkelgeschwindigkeit (AgSpd_{ACT}) in die von der Rückstellrichtung abgewandte Richtung größer als ein voreingestellter Winkelgeschwindigkeitsschwellenwert ist, um zu vermeiden, dass geringfügige Anpassungen des Fahrers am Lenkrad die unterstützte Rückstellung beeinträchtigen. Des Weiteren wird der Absolutwert der Differenz zwischen dem Maximalwert der Handkraft des Fahrers (HTₘₐₓ) und der aktuellen Rückstell-Handkraft des Fahrers (HT) berechnet, um eine Handkraftdifferenz (HT_{diff}) zu erhalten.

Es versteht sich, dass die Differenz zwischen dem Maximalwert der Handkraft des Fahrers (HTₘₐₓ) und der aktuellen Rückstell-Handkraft des Fahrers (HT) eine Vektordifferenz ist. Das heißt, wenn der Maximalwert der Handkraft des Fahrers (HTₘₐₓ) und die aktuelle Rückstell-Handkraft des Fahrers (HT) dieselbe Richtung haben, ist die Handkraftdifferenz (HT_{diff}) gleich der Differenz aus dem Absolutwert des Maximalwerts der Handkraft des Fahrers (HTₘₐₓ) abzüglich des Absolutwerts der aktuellen Rückstell-Handkraft des Fahrers (HT); wenn der Maximalwert der Handkraft des Fahrers (HTₘₐₓ) und die aktuelle Rückstell-Handkraft des Fahrers (HT) entgegengesetzte Richtungen haben, ist die Handkraftdifferenz (HT_{diff}) gleich der Summe aus dem Absolutwert des Maximalwerts der Handkraft des Fahrers (HTₘₐₓ) und dem Absolutwert der aktuellen Rückstell-Handkraft des Fahrers (HT).

Des Weiteren kann basierend auf der Handkraftdifferenz (HT_{diff}) als Eingangsgröße der Rückstellmomentkoeffizient (RT_{fac}) beispielsweise durch Nachschlagen in einer Tabelle erhalten werden. Dabei steigt der Rückstellmomentkoeffizient (RT_{fac}) mit zunehmender HT_{diff}. Durch die Verwendung der Handkraftdifferenz (HT_{diff}) zur Steuerung der Rückstellung kann das Problem der inkonsistenten Rückstellgeschwindigkeiten und verbleibenden Rückstellwinkel der linken und rechten Seite des elektrohydraulischen gekoppelten Lenksystems des Fahrzeugs optimiert werden.

In einigen Ausführungsbeispielen umfasst das Erhalten des ursprünglichen Rückstellanforderungsmoments (RT_{RAW}) basierend auf der Fahrzeuggeschwindigkeit (V), dem Lenkradwinkel (AG) und der Lenkradwinkelgeschwindigkeit (AgSpd_{ACT}): Berechnen und Erhalten einer Rückstell-Sollwinkelgeschwindigkeit (AgSpdₜₐᵣ) basierend auf der Fahrzeuggeschwindigkeit (V) und dem Lenkradwinkel (AG) als Eingangsgrößen, beispielsweise durch Nachschlagen in einer Tabelle; Erhalten der Lenkradwinkelgeschwindigkeit (AgSpd_{ACT}); Berechnen des Absolutwerts der Differenz zwischen der Rückstell-Sollwinkelgeschwindigkeit (AgSpdₜₐᵣ) und der Lenkradwinkelgeschwindigkeit (AgSpd_{ACT}), um eine Lenkradwinkelgeschwindigkeitsdifferenz (AgSpd_{diff}) zu erhalten.

Es versteht sich, dass die Differenz zwischen der Rückstell-Sollwinkelgeschwindigkeit (AgSpdₜₐᵣ) und der Lenkradwinkelgeschwindigkeit (AgSpd_{ACT}) eine Vektordifferenz ist. Dabei ist die Richtung der Rückstell-Sollwinkelgeschwindigkeit (AgSpdₜₐᵣ) die Richtung zur Rückstellung hin, und die Richtung der Lenkradwinkelgeschwindigkeit (AgSpd_{ACT}) ist die Richtung der aktuellen Winkelgeschwindigkeit des Lenkrads.

Des Weiteren wird die Lenkradwinkelgeschwindigkeitsdifferenz (AgSpd_{diff}) in einen Proportional-Integral-Differential (PID)-Regler (21) eingegeben, um das ursprüngliche Rückstellanforderungsmoment (RT_{RAW}) zu erhalten.

Die Lenkradwinkelgeschwindigkeitsdifferenz (AgSpd_{diff}) wird in den PID-Regler (21) eingegeben, und der Proportionalanteil (P-Anteil), der Integralanteil (I-Anteil) und der Differentialanteil (D-Anteil) werden addiert, um das ursprüngliche Rückstellanforderungsmoment (RT_{RAW}) zu erhalten. Dabei wird in einigen Ausführungsbeispielen der I-Anteil in dem PID-Regler auf Null gesetzt, wenn der Rückstellmomentkoeffizient (RT_{fac}) kleiner als ein Kalibrierungsschwellenwert ist. Das heißt, wenn der Absolutwert der Differenz zwischen dem Maximalwert der Handkraft des Fahrers (HTₘₐₓ) und der aktuellen Rückstell-Handkraft des Fahrers (HT) klein ist, d. h. die Handkraftdifferenz (HT_{diff}) klein ist, bewirkt dies, dass der Rückstellmomentkoeffizient (RT_{fac}) kleiner als der Kalibrierungsschwellenwert ist, und dann wird der I-Anteil in dem PID-Regler auf Null gesetzt. Daher kann während des Rückstellvorgangs der haptische Stoß bei der Übernahme durch den Fahrer wirksam reduziert werden.

In einigen Ausführungsbeispielen umfasst das Erhalten des Rückstellanforderungsmoments (RT) basierend auf dem Rückstellmomentkoeffizienten (RT_{fac}) und dem ursprünglichen Rückstellanforderungsmoment (RT_{RAW}): Eingeben des Produkts aus dem Rückstellmomentkoeffizienten (RT_{fac}) und dem ursprünglichen Rückstellanforderungsmoment (RT_{RAW}) in einen Begrenzer (31), um das Rückstellanforderungsmoment (RT) zu erhalten. Der Begrenzer (31) kann dazu verwendet werden, den Maximalwert und den Minimalwert des Rückstellanforderungsmoments (RT) zu begrenzen. Dabei begrenzt der Begrenzer (31) den Maximalwert und den Minimalwert des Rückstellanforderungsmoments (RT) basierend auf der Fahrzeuggeschwindigkeit (V) und dem Lenkradwinkel (AG).

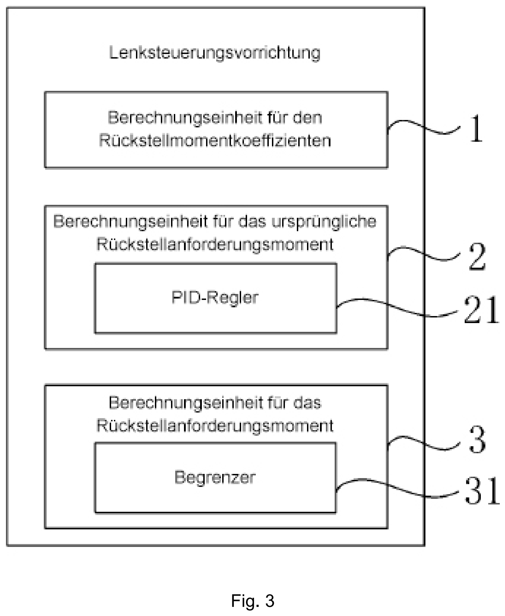

Die vorliegende Erfindung schlägt eine Lenksteuerungsvorrichtung vor. Fig. 3 zeigt ein strukturelles Blockdiagramm einer Lenksteuerungsvorrichtung gemäß einigen Ausführungsbeispielen. In Verbindung mit Fig. 2 und Fig. 3 gezeigt, ist die Lenksteuerungsvorrichtung dazu konfiguriert, ein Rückstellanforderungsmoment (RT) basierend auf der aktuellen Handkraft des Fahrers (HT), der Fahrzeuggeschwindigkeit (V), dem Lenkradwinkel (AG) und der Lenkradwinkelgeschwindigkeit (AgSpd_{ACT}) zu erhalten, um die Rückstellung des Fahrzeugs unterstützend zu steuern. Wobei die Lenksteuerungsvorrichtung umfasst:
eine Berechnungseinheit (1) für den Rückstellmomentkoeffizienten, die dazu konfiguriert ist, einen Rückstellmomentkoeffizienten (RT_{fac}) basierend auf dem Lenkradwinkel (AG) und der aktuellen Handkraft des Fahrers (HT) zu berechnen und zu erhalten;
eine Berechnungseinheit (2) für das ursprüngliche Rückstellanforderungsmoment, die dazu konfiguriert ist, ein ursprüngliches Rückstellanforderungsmoment (RT_{RAW}) basierend auf der Fahrzeuggeschwindigkeit (V), dem Lenkradwinkel (AG) und der Lenkradwinkelgeschwindigkeit (AgSpdACT) zu berechnen und zu erhalten; sowie eine Berechnungseinheit (3) für das Rückstellanforderungsmoment, die dazu konfiguriert ist, das Rückstellanforderungsmoment (RT) basierend auf dem Rückstellmomentkoeffizienten (RT_{fac}) und dem ursprünglichen Rückstellanforderungsmoment (RT_{RAW}) zu berechnen und zu erhalten.

In einigen Ausführungsbeispielen ist die Berechnungseinheit (1) für den Rückstellmomentkoeffizienten ferner dazu konfiguriert: während eines Bewegungsvorgangs, bei dem die Lenkrichtung (D) des Lenkrads von der Rückstellrichtung abgewandt ist, einen Maximalwert der Handkraft des Fahrers (HTₘₐₓ) basierend auf der aktuellen Handkraft des Fahrers (HT) zu erhalten; sowie den Rückstellmomentkoeffizienten (RT_{fac}) basierend auf dem Maximalwert der Handkraft des Fahrers (HTₘₐₓ) und der aktuellen Handkraft des Fahrers (HT) zu erhalten. Wobei, wenn die aktuelle Handkraft des Fahrers (HT) in die von der Rückstellrichtung abgewandte Richtung ausgeübt wird und die Lenkradwinkelgeschwindigkeit (AgSpd_{ACT}) in die von der Rückstellrichtung abgewandte Richtung größer als ein voreingestellter Winkelgeschwindigkeitsschwellenwert ist, der Maximalwert der Handkraft des Fahrers (HTₘₐₓ) zurückgesetzt wird, sodass der Maximalwert der Handkraft des Fahrers (HTₘₐₓ) entsprechend den Änderungen der Echtzeitsteuerung des Lenkrads durch den Fahrer in Echtzeit aktualisiert werden kann, wodurch die Rückstellsteuerung der Lenksteuerungsvorrichtung in Echtzeit angepasst werden kann.

In einigen Ausführungsbeispielen ist die Berechnungseinheit (1) für den Rückstellmomentkoeffizienten ferner dazu konfiguriert: den Absolutwert der Differenz zwischen dem Maximalwert der Handkraft des Fahrers (HTₘₐₓ) und der aktuellen Rückstell-Handkraft des Fahrers (HT) zu berechnen, um eine Handkraftdifferenz (HT_{diff}) zu erhalten, sowie basierend auf der Handkraftdifferenz (HT_{diff}) den Rückstellmomentkoeffizienten (RT_{fac}) zu erhalten. Dabei kann der Rückstellmomentkoeffizient (RT_{fac}) beispielsweise durch Nachschlagen in einer Tabelle erhalten werden, wobei die Handkraftdifferenz (HT_{diff}) als Eingangsgröße dient. Der Rückstellmomentkoeffizient (RT_{fac}) steigt mit zunehmender HT_{diff}.

In einigen Ausführungsbeispielen umfasst die Berechnungseinheit (2) für das ursprüngliche Rückstellanforderungsmoment auch einen PID-Regler (21); wobei die Berechnungseinheit (2) für das ursprüngliche Rückstellanforderungsmoment ferner dazu konfiguriert ist: eine Rückstell-Sollwinkelgeschwindigkeit (AgSpdₜₐᵣ) basierend auf der Fahrzeuggeschwindigkeit (V) und dem Lenkradwinkel (AG) zu berechnen und zu erhalten, die Lenkradwinkelgeschwindigkeit (AgSpd_{ACT}) zu berechnen und zu erhalten, den Absolutwert der Differenz zwischen der Rückstell-Sollwinkelgeschwindigkeit (AgSpdₜₐᵣ) und der Lenkradwinkelgeschwindigkeit (AgSpd_{ACT}) zu berechnen, um eine Lenkradwinkelgeschwindigkeitsdifferenz (AgSpd_{diff}) zu erhalten, die Lenkradwinkelgeschwindigkeitsdifferenz (AgSpd_{diff}) in den PID-Regler (21) einzugeben, um das ursprüngliche Rückstellanforderungsmoment (RT_{RAW}) zu erhalten.

Wobei die Berechnungseinheit (2) für das ursprüngliche Rückstellanforderungsmoment ferner dazu konfiguriert ist: den I-Anteil in dem PID-Regler (21) auf Null zu setzen, wenn der Rückstellmomentkoeffizient (RT_{fac}) kleiner als ein Kalibrierungsschwellenwert ist, wodurch der haptische Stoß bei der Übernahme durch den Fahrer während des Rückstellvorgangs wirksam reduziert werden kann.

In einigen Ausführungsbeispielen umfasst die Berechnungseinheit (3) für das Rückstellanforderungsmoment auch einen Begrenzer (31). Wobei die Berechnungseinheit (3) für das Rückstellanforderungsmoment ferner dazu konfiguriert ist: das Produkt aus dem Rückstellmomentkoeffizienten (RT_{fac}) und dem ursprünglichen Rückstellanforderungsmoment (RT_{RAW}) in den Begrenzer (31) einzugeben, um das Rückstellanforderungsmoment (RT) zu erhalten, um den Maximalwert und den Minimalwert des Rückstellanforderungsmoments (RT) zu begrenzen.

Im Einzelnen ist der Begrenzer (31) dazu konfiguriert: den Maximalwert und den Minimalwert des Rückstellanforderungsmoments (RT) basierend auf der Fahrzeuggeschwindigkeit (V) und dem Lenkradwinkel (AG) zu begrenzen, damit das Rückstellanforderungsmoment (RT) entsprechend dem Echtzeitzustand des Fahrzeugs in einem bestimmten Bereich begrenzt werden kann, um zu verhindern, dass das Rückstellanforderungsmoment (RT) zu groß oder zu klein wird.

Durch das Lenksteuerungsverfahren und die Lenksteuerungsvorrichtung, die durch die Ausführungsbeispiele der vorliegenden Erfindung bereitgestellt werden, kann in einem EHPS-System die Verwendung der Handkraftdifferenz (HT_{diff}) zur Steuerung der Rückstellung das Problem der inkonsistenten Rückstellgeschwindigkeiten und verbleibenden Rückstellwinkel der linken und rechten Seite des elektrohydraulischen gekoppelten Lenksystems des Fahrzeugs optimieren. Darüber hinaus führt die vorliegende Erfindung eine PID-Regelung für das Rückstellmoment durch; wenn die Handkraftdifferenz (HT_{diff}) des Fahrers kleiner als ein voreingestellter Schwellenwert ist, wird der I-Anteil der PID-Regelung auf Null gesetzt; daher kann während des Rückstellvorgangs der haptische Stoß bei der Übernahme durch den Fahrer wirksam reduziert werden.

Des Weiteren ist zu verstehen, dass, obwohl die Vorgänge in den Ausführungsbeispielen der vorliegenden Erfindung in den Zeichnungen in einer bestimmten Reihenfolge beschrieben sind, dies nicht so zu verstehen ist, dass diese Vorgänge in der gezeigten spezifischen Reihenfolge oder in serieller Reihenfolge ausgeführt werden müssen, oder dass alle gezeigten Vorgänge ausgeführt werden müssen, um das gewünschte Ergebnis zu erzielen. In bestimmten Umgebungen können Multitasking und parallele Verarbeitung vorteilhaft sein.

Andere Ausführungsformen der Erfindung werden dem Fachmann bei Betrachtung der Beschreibung und Praxis der hierin offenbarten Erfindung leicht ersichtlich sein. Diese Anmeldung soll jegliche Variationen, Verwendungen oder Anpassungen der Erfindung abdecken, die den allgemeinen Prinzipien der Erfindung folgen und allgemeines Wissen oder übliche technische Mittel auf diesem Fachgebiet einschließen, die in dieser Erfindung nicht offenbart sind. Die Beschreibung und die Ausführungsbeispiele sind nur als beispielhaft anzusehen, wobei der wahre Schutzumfang und Geist der Erfindung durch die folgenden Ansprüche angegeben wird.

Es ist zu verstehen, dass die Erfindung nicht auf die oben beschriebenen und in den Zeichnungen dargestellten genauen Strukturen beschränkt ist und dass verschiedene Modifikationen und Änderungen vorgenommen werden können, ohne von ihrem Schutzumfang abzuweichen. Der Schutzumfang der Erfindung wird nur durch die beigefügten Ansprüche begrenzt.

## Patentansprüche

1. Lenksteuerungsverfahren, **dadurch gekennzeichnet, dass** ein Rückstellanforderungsmoment (RT) basierend auf der aktuellen Handkraft des Fahrers (HT), der Fahrzeuggeschwindigkeit (V), dem Lenkradwinkel (AG) und der Lenkradwinkelgeschwindigkeit (AgSpd_{ACT}) erhalten wird, um die Rückstellung des Fahrzeugs unterstützend zu steuern; wobei
ein Rückstellmomentkoeffizient (RT_{fac}) basierend auf dem Lenkradwinkel (AG) und der aktuellen Handkraft des Fahrers (HT) erhalten wird;
ein ursprüngliches Rückstellanforderungsmoment (RT_{RAW}) basierend auf der Fahrzeuggeschwindigkeit (V), dem Lenkradwinkel (AG) und der Lenkradwinkelgeschwindigkeit (AgSpd_{ACT}) erhalten wird; sowie
ein Rückstellanforderungsmoment (RT) basierend auf dem Rückstellmomentkoeffizienten (RT_{fac}) und dem ursprünglichen Rückstellanforderungsmoment (RT_{RAW}) erhalten wird.

2. Lenksteuerungsverfahren nach Anspruch 1, **dadurch gekennzeichnet, dass** das Erhalten eines Rückstellmomentkoeffizienten (RT_{fac}) basierend auf dem Lenkradwinkel (AG) und der aktuellen Handkraft des Fahrers (HT) umfasst:
während eines Bewegungsvorgangs, bei dem die Lenkrichtung (D) des Lenkrads von der Rückstellrichtung abgewandt ist, Erhalten eines Maximalwerts der Handkraft des Fahrers (HTₘₐₓ) basierend auf der aktuellen Handkraft des Fahrers (HT); sowie Erhalten des Rückstellmomentkoeffizienten (RT_{fac}) basierend auf dem Maximalwert der Handkraft des Fahrers (HTₘₐₓ) und der aktuellen Handkraft des Fahrers (HT).

3. Lenksteuerungsverfahren nach Anspruch 2, **dadurch gekennzeichnet, dass**, wenn die aktuelle Handkraft des Fahrers (HT) in die von der Rückstellrichtung abgewandte Richtung ausgeübt wird und die Lenkradwinkelgeschwindigkeit (AgSpd_{ACT}) in die von der Rückstellrichtung abgewandte Richtung größer als ein voreingestellter Winkelgeschwindigkeitsschwellenwert ist, der Maximalwert der Handkraft des Fahrers (HTₘₐₓ) zurückgesetzt wird.

4. Lenksteuerungsverfahren nach Anspruch 2, **dadurch gekennzeichnet, dass** der Absolutwert der Differenz zwischen dem Maximalwert der Handkraft des Fahrers (HTₘₐₓ) und der aktuellen Rückstell-Handkraft des Fahrers (HT) berechnet wird, um eine Handkraftdifferenz (HT_{diff}) zu erhalten, und der Rückstellmomentkoeffizient (RT_{fac}) basierend auf der Handkraftdifferenz (HT_{diff}) erhalten wird.

5. Lenksteuerungsverfahren nach Anspruch 1, **dadurch gekennzeichnet, dass** das Erhalten eines ursprünglichen Rückstellanforderungsmoments (RT_{RAW}) basierend auf der Fahrzeuggeschwindigkeit (V), dem Lenkradwinkel (AG) und der Lenkradwinkelgeschwindigkeit (AgSpd_{ACT}) umfasst:
Berechnen und Erhalten einer Rückstell-Sollwinkelgeschwindigkeit (AgSpdₜₐᵣ) basierend auf der Fahrzeuggeschwindigkeit (V) und dem Lenkradwinkel (AG);
Erhalten der Lenkradwinkelgeschwindigkeit (AgSpd_{ACT}); Berechnen des Absolutwerts der Differenz zwischen der Rückstell-Sollwinkelgeschwindigkeit (AgSpdₜₐᵣ) und der Lenkradwinkelgeschwindigkeit (AgSpd_{ACT}), um eine
Lenkradwinkelgeschwindigkeitsdifferenz (AgSpd_{diff}) zu erhalten; Eingeben der Lenkradwinkelgeschwindigkeitsdifferenz (AgSpd_{diff}) in einen Proportional-Integral-Differential (PID)-Regler (21), um das ursprüngliche Rückstellanforderungsmoment (RT_{RAW}) zu erhalten.

6. Lenksteuerungsverfahren nach Anspruch 5, **dadurch gekennzeichnet, dass** der I-Anteil in dem PID-Regler (21) auf Null gesetzt wird, wenn der Rückstellmomentkoeffizient (RT_{fac}) kleiner als ein Kalibrierungsschwellenwert ist.

7. Lenksteuerungsverfahren nach Anspruch 1, **dadurch gekennzeichnet, dass** das Erhalten des Rückstellanforderungsmoments (RT) basierend auf dem Rückstellmomentkoeffizienten (RT_{fac}) und dem ursprünglichen Rückstellanforderungsmoment (RT_{RAW}) umfasst:
Eingeben des Produkts aus dem Rückstellmomentkoeffizienten (RT_{fac}) und dem ursprünglichen Rückstellanforderungsmoment (RT_{RAW}) in einen Begrenzer (31), um das Rückstellanforderungsmoment (RT) zu erhalten, um den Maximalwert und den Minimalwert des Rückstellanforderungsmoments (RT) zu begrenzen.

8. Lenksteuerungsverfahren nach Anspruch 7, **dadurch gekennzeichnet, dass** der Begrenzer (31) den Maximalwert und den Minimalwert des Rückstellanforderungsmoments (RT) basierend auf der Fahrzeuggeschwindigkeit (V) und dem Lenkradwinkel (AG) begrenzt.

9. Lenksteuerungsvorrichtung, **dadurch gekennzeichnet, dass** die Lenksteuerungsvorrichtung dazu konfiguriert ist, ein Rückstellanforderungsmoment (RT) basierend auf der aktuellen Handkraft des Fahrers (HT), der Fahrzeuggeschwindigkeit (V), dem Lenkradwinkel (AG) und der Lenkradwinkelgeschwindigkeit (AgSpd_{ACT}) zu erhalten, um die Rückstellung des Fahrzeugs unterstützend zu steuern;
wobei die Lenksteuerungsvorrichtung umfasst:
eine Berechnungseinheit (1) für einen Rückstellmomentkoeffizienten, die dazu konfiguriert ist, einen Rückstellmomentkoeffizienten (RT_{fac}) basierend auf dem Lenkradwinkel (AG) und der aktuellen Handkraft des Fahrers (HT) zu berechnen und zu erhalten;
eine Berechnungseinheit (2) für ein ursprüngliches Rückstellanforderungsmoment, die dazu konfiguriert ist, ein ursprüngliches Rückstellanforderungsmoment (RT_{RAW}) basierend auf der Fahrzeuggeschwindigkeit (V), dem Lenkradwinkel (AG) und der Lenkradwinkelgeschwindigkeit (AgSpdACT) zu berechnen und zu erhalten; sowie eine Berechnungseinheit (3) für ein Rückstellanforderungsmoment, die dazu konfiguriert ist, das Rückstellanforderungsmoment (RT) basierend auf dem Rückstellmomentkoeffizienten (RT_{fac}) und dem ursprünglichen Rückstellanforderungsmoment (RT_{RAW}) zu berechnen und zu erhalten.

10. Lenksteuerungsvorrichtung nach Anspruch 9, **dadurch gekennzeichnet, dass** die Berechnungseinheit (1) für den Rückstellmomentkoeffizienten ferner dazu konfiguriert ist: während eines Bewegungsvorgangs, bei dem die Lenkrichtung (D) des Lenkrads von der Rückstellrichtung abgewandt ist, einen Maximalwert der Handkraft des Fahrers (HTₘₐₓ) basierend auf der aktuellen Handkraft des Fahrers (HT) zu erhalten; sowie den Rückstellmomentkoeffizienten (RT_{fac}) basierend auf dem Maximalwert der Handkraft des Fahrers (HTₘₐₓ) und der aktuellen Handkraft des Fahrers (HT) zu erhalten.

11. Lenksteuerungsvorrichtung nach Anspruch 10, **dadurch gekennzeichnet, dass** die Berechnungseinheit (1) für den Rückstellmomentkoeffizienten ferner dazu konfiguriert ist: wenn die aktuelle Handkraft des Fahrers (HT) in die von der Rückstellrichtung abgewandte Richtung ausgeübt wird und die Lenkradwinkelgeschwindigkeit (AgSpd_{ACT}) in die von der Rückstellrichtung abgewandte Richtung größer als ein voreingestellter Winkelgeschwindigkeitsschwellenwert ist, den Maximalwert der Handkraft des Fahrers (HTₘₐₓ) zurückzusetzen.

12. Lenksteuerungsvorrichtung nach Anspruch 10, **dadurch gekennzeichnet, dass** die Berechnungseinheit (1) für den Rückstellmomentkoeffizienten ferner dazu konfiguriert ist: den Absolutwert der Differenz zwischen dem Maximalwert der Handkraft des Fahrers (HTₘₐₓ) und der aktuellen Rückstell-Handkraft des Fahrers (HT) zu berechnen, um eine Handkraftdifferenz (HT_{diff}) zu erhalten, sowie basierend auf der Handkraftdifferenz (HT_{diff}) den Rückstellmomentkoeffizienten (RT_{fac}) zu erhalten.

13. Lenksteuerungsvorrichtung nach Anspruch 9, **dadurch gekennzeichnet, dass** die Berechnungseinheit (2) für das ursprüngliche Rückstellanforderungsmoment einen Proportional-Integral-Differential-Regler (PID-Regler) (21) umfasst, wobei die Berechnungseinheit (2) für das ursprüngliche Rückstellanforderungsmoment ferner dazu konfiguriert ist: eine Rückstell-Sollwinkelgeschwindigkeit (AgSpdₜₐᵣ) basierend auf der Fahrzeuggeschwindigkeit (V) und dem Lenkradwinkel (AG) zu berechnen und zu erhalten, die Lenkradwinkelgeschwindigkeit (AgSpd_{ACT}) zu berechnen und zu erhalten, den Absolutwert der Differenz zwischen der Rückstell-Sollwinkelgeschwindigkeit (AgSpdₜₐᵣ) und der Lenkradwinkelgeschwindigkeit (AgSpd_{ACT}) zu berechnen, um eine Lenkradwinkelgeschwindigkeitsdifferenz (AgSpd_{diff}) zu erhalten, die Lenkradwinkelgeschwindigkeitsdifferenz (AgSpd_{diff}) in den PID-Regler (21) einzugeben, um das ursprüngliche Rückstellanforderungsmoment (RT_{RAW}) zu erhalten.

14. Lenksteuerungsvorrichtung nach Anspruch 13, **dadurch gekennzeichnet, dass** die Berechnungseinheit (2) für das ursprüngliche Rückstellanforderungsmoment ferner dazu konfiguriert ist: den I-Anteil in dem PID-Regler (21) auf Null zu setzen, wenn der Rückstellmomentkoeffizient (RT_{fac}) kleiner als ein Kalibrierungsschwellenwert ist.

15. Lenksteuerungsvorrichtung nach Anspruch 9, **dadurch gekennzeichnet, dass** die Berechnungseinheit (3) für das Rückstellanforderungsmoment einen Begrenzer (31) umfasst, wobei die Berechnungseinheit (3) für das Rückstellanforderungsmoment ferner dazu konfiguriert ist: das Produkt aus dem Rückstellmomentkoeffizienten (RT_{fac}) und dem ursprünglichen Rückstellanforderungsmoment (RT_{RAW}) in den Begrenzer (31) einzugeben, um das Rückstellanforderungsmoment (RT) zu erhalten, um den Maximalwert und den Minimalwert des Rückstellanforderungsmoments (RT) zu begrenzen.

16. Lenksteuerungsvorrichtung nach Anspruch 15, **dadurch gekennzeichnet, dass** der Begrenzer (31) dazu konfiguriert ist: den Maximalwert und den Minimalwert des Rückstellanforderungsmoments (RT) basierend auf der Fahrzeuggeschwindigkeit (V) und dem Lenkradwinkel (AG) zu begrenzen.
